# EUROPEAN PATENT APPLICATION

(11) **EP 4 625 883 A1**
(43) Date of publication of application: **01.10.2025**
(21) Application number: 25160727.1
(22) Date of filing: 27.02.2025
(51) Int. Cl.: H04L 9/32

(54) **SYSTEMS AND METHODS FOR CRYPTOGRAPHIC IDENTITY MANAGEMENT IN CONTROL SYSTEMS**

(30) Priority: 26.03.2024 US 202463569948 P
(71) Applicant: Schneider Electric Systems USA, Inc., Foxborough, MA 02035 (US)
(72) Inventor: Drias, Zakarya, Boston, 02116 (US)
(74) Representative: Friese Goeden Patentanwälte PartGmbB

(57) **Abstract**

Cryptographic identity management in an industrial control system. During a setup phase, a public key is defined and a private key is generated for a first entity while the first entity is in the non-operational mode. During an operational mode of the first entity, a second entity that is in a non-operational mode is identified. A public key is defined and a private key is generated for the second entity while the second entity is in the non-operational mode. Responsive to a request, an online identity status is transmitted to an entity (e.g., first or second entity), while the entity is in the operational mode. In this manner, the entity may be configured to use the online identity status to perform an encryption and/or a signature operation.

## Description

### CROSS-REFERENCE TO RELATED APPLICATION

This application claims the benefit of U.S. Provisional Patent Application No. 63/569,948, filed March 26, 2024.

### FIELD

Aspects of the present disclosure relate to cryptographic mechanisms for secure network communications and, more particularly, to systems and methods for cryptographic identity management in control systems.

### BACKGROUND

Two types of keys are used with known public key cryptographic systems: public keys and private keys. Private keys are generally used to provide confidentiality, integrity, and authenticity in secure communication and data exchange. It is crucial to keep private keys secure and confidential because anyone who possesses them can potentially decrypt messages intended to the owner, impersonate the owner in digital signatures, or perform other cryptographic operations on behalf of the owner. Accordingly, there are security concerns with at least some known cryptographic systems which store the private keys centrally by a trusted authority.

For example, a "key escrow" problem arises with at least some known cryptographic systems because the central storage authority essentially holds the capability to decrypt any encrypted message within the system. If the central storage authority is compromised, coerced, or acts maliciously, all private keys stored there could be compromised, potentially leading to widespread security breaches. For another example, a "revocation problem" arises with at least some known cryptographic systems because it can be difficult to effectively revoke the privileges associated with a compromised or otherwise invalidated private key. Revocation typically involves marking the public key and/or private key as invalid so that it can no longer be used for encryption or verification of digital signatures. However, revocation introduces several challenges, such as timeliness, accuracy, verification, and scalability,

### SUMMARY

The present disclosure enables organizations to manage cryptographic identities efficiently and reliably. In one aspect, a method is provided for cryptographic identity management in an industrial control system including a plurality of entities. During a setup phase, the method includes defining a public key for a first entity and generating a private key for the first entity while the first entity is in the non-operational mode. During an operational phase in which the first entity is in the operational mode, the method further includes identifying a second entity that is in the non-operational mode and defining a public key for the second entity and generating a private key for the second entity while the second entity is in the non-operational mode. The method further includes receiving, from the first entity and/or second entity, a request for an online identity status while the first entity and/or second entity are in the operational mode, and transmitting, to the first entity and/or second entity, a response including the online identity status. In this manner, the first entity and/or second entity may be configured to use the online identity status to perform an encryption operation and/or a signature operation.

In another aspect, a system is provided for cryptographic identity management in an industrial control system. The system includes one or more storage media storing instructions and one or more processors communicatively coupled to the storage media and configured to execute the instructions to implement one or more private key generators and one or more identity revocation servers. During a setup phase, the private key generators are configured to define a public key for a first entity and generate a private key for the first entity while the first entity is in a non-operational mode. During an operational phase in which the first entity is in an operational mode, the private key generators are configured to identify a second entity that is in the non-operational mode and define a second public key for the second entity and generate a second private key for the second entity while the second entity is in the non-operational mode. The identity revocation servers are configured to receive, from the first entity and/or second entity, a request for an online identity status and transmit, to the first entity and/or second entity, a response including the online identity status. In this manner, the first entity and/or second entity may be configured to use the online identity status to perform an encryption operation and/or a signature operation.

In yet another aspect, an industrial control system is provided. The industrial control system includes a plurality of entities, each configured to be switched between a non-operational mode and an operational mode, one or more private key generators configured to define a plurality of public keys for the plurality of entities and generate a plurality of private keys for the plurality of entities, and one or more identity revocation servers configured to maintain a database including a plurality of online identity statuses associated with the plurality of entities. During a setup phase, private key generators define a first public key for a first entity and generate a first private key for the first entity while the first entity is in the non-operational mode. During an operational phase in which the first entity is in the operational mode, the private key generators identify a second entity that is in the non-operational mode and define a second public key for the second entity and generate a second private key for the second entity while the second entity is in the non-operational mode. The identity revocation servers receive, from the first entity and/or second entity, a request for an online identity status and transmit, to the first entity and/or second entity, a response including the online identity status. In this manner, the first entity and/or second entity may be configured to use the online identity status to perform an encryption operation and/or a signature operation.

Other aspects and features of the present disclosure will be in part apparent and in part pointed out herein. This Summary is provided to introduce a selection of concepts in a simplified form that are further described below in the Detailed Description. This Summary is not intended to identify key features or essential features of the claimed subject matter, nor is it intended to be used in isolation as an aid in determining the scope of the claimed subject matter.

### BRIEF DESCRIPTION OF THE DRAWINGS

Aspects of the present disclosure are described in detail below with reference to the attached drawing figures, wherein:
FIG. 1 is a block diagram illustrating an example environment;
FIG. 2 is a block diagram illustrating an example system for cryptographic identity management in an environment, such as the environment illustrated in FIG. 1;
FIG. 3 is a block diagram illustrating example key generation and distribution operations which may be performed using the system shown in FIG. 2;
FIG. 4 is a block diagram illustrating example identity revocation status-related operations which may be performed using the system shown in FIG. 2;
FIG. 5 is a block diagram illustrating example encryption and decryption operations which may be performed using the system shown in FIG. 2;
FIG. 6 is a block diagram illustrating example signature and signature verification operations which may be performed using the system shown in FIG. 2;
FIG. 7 is a flow chart illustrating an example method for cryptographic identity management using the system shown in FIG. 2;
FIG. 8 is a computer architecture diagram illustrating a computing system that may be used to perform one or more computing operations in the environment illustrated in FIG. 1 and/or the system illustrated in FIG. 2.

Corresponding reference numbers indicate corresponding parts throughout the drawings.

### DETAILED DESCRIPTION

According to various examples of the present disclosure, at least some private keys may be generated in a setup phase that takes place before an operational phase. During the setup phase, a plurality of entities, including field devices, sensors, and/or supervisory computers, may be set up before setting the system online for operation by defining public keys for the entities and generating private keys for the entities offline, e.g., while the entities are in a non-operational mode. Examples described herein include a private key generator (PKG) which may generate a private key for an entity using an identity-based encryption (IBE) scheme or a hierarchical identity-based encryption (HIBE) scheme. After setting up the system online, any new entity may be set up offline in a similar manner before joining the system in operation.

To effectively manage the revocation of privileges associated with compromised or otherwise invalidated keys, a trusted identity revocation server (IRS) may be used to manage a list of all of the revoked identities and a time associated with the revocation (e.g., a validity duration). In contrast to the PKG, the IRS may be online and reachable by the entities. In some examples, an entity may request its revocation status and get it time-stamped and signed by the IRS. The entity may then use this IRS response to perform an encryption operation, a signature operation, and/or any other cryptographic operation.

Aspects of the present disclosure provide for a computing system that performs one or more operations in an environment including a plurality of devices coupled to each other via a network (e.g., a local area network (LAN), a wide area network (WAN), the internet). The systems and methods described herein may be implemented using computer programming or engineering techniques including computer software, firmware, hardware, or a combination or subset thereof. Unless defined otherwise, all technical and scientific terms used herein have the same meaning as commonly understood by one of ordinary skill in the art to which the present disclosure belongs. Although any methods and materials similar to or equivalent to those described herein can be used in the practice or testing of the present disclosure, some preferred methods and materials are described below.

The systems and methods disclosed herein provide a technological solution to such technical problems by using an online identity status response (OIS-Resp) issued by a trusted identity revocation server (IRS) to perform an encryption operation, a signature operation, and/or any other cryptographic operation described herein. The technical effect of the systems and methods described herein is achieved by using a computing system configured to perform one or more of the following operations:
(i) defining a public key for a first entity and generating a private key for the first entity while the first entity is in the non-operational mode, (ii) identifying a second entity that is in a non-operational mode and defining a public key for the second entity and generating a private key for the second entity while the second entity is in the non-operational mode; (iii) receiving, from the first entity and/or second entity, a request for an online identity status while the first entity and the second entity are in the operational mode; and/or (iv) transmitting, to the first entity and/or second entity, a response including the online identity status.

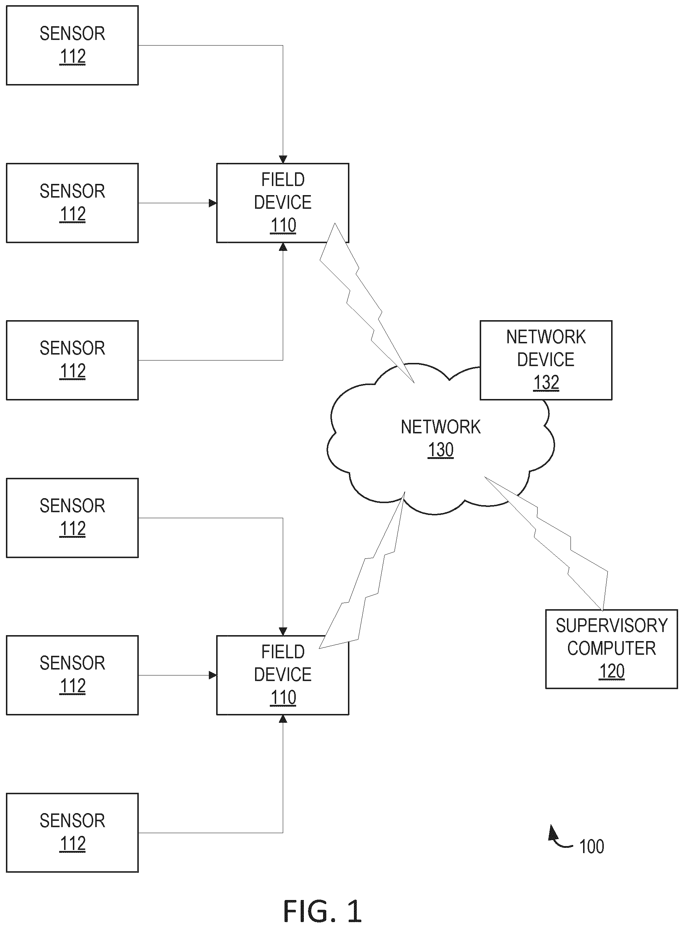

FIG. 1 shows an example industrial control system (ICS) 100 for managing and/or automating one or more processes and/or machinery. As shown in FIG. 1, the ICS 100 may include a plurality of entities including field devices 110, sensors 112, and/or supervisory computers 120. A field device 110 may be or include a remote terminal unit (RTU), a programmable logic controller (PLC), and/or an intelligent electronic device (IED) configured to receive or collect sensor information from one or more sensors 112. In some examples, the field devices 110 are spread out across a widely-dispersed infrastructure to facilitate monitoring and/or controlling one or more industrial processes and/or machinery.

A supervisory computer 120 may be used to monitor and/or control the field devices 110 and/or sensors 112. For example, the supervisory computer 120 may receive or collect the sensor information from the field devices 110 and analyze the sensor information to facilitate monitoring and/or controlling one or more industrial processes and/or machinery. In some examples, the supervisory computer 120 is configured to automatically operate and/or reconfigure one or more field devices 110 based on the sensor information.

The supervisory computer 120 is communicatively coupled to the field devices 110 via a network 130. In some examples, the network 130 is an ICS network that connects the supervisory computer 120 to the field devices 110 for automation and process control applications. As shown in FIG. 1, the network 130 may include one or more network devices 132, such as a firewall, unidirectional gateway, and/or data diode, to facilitate protecting the field devices 110 and/or supervisory computer 120 from external threats.

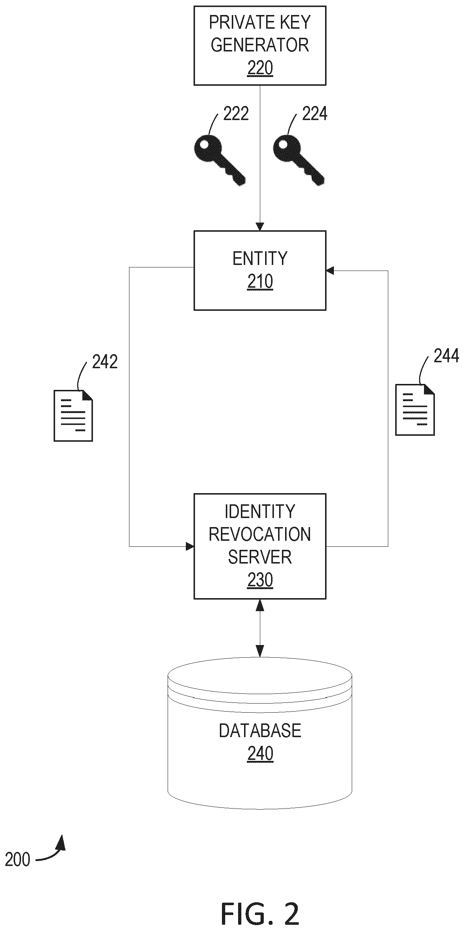

FIG. 2 shows an example system 200 that may be used to facilitate secure communication between a plurality of entities 210 (e.g., field devices 110, sensors 112, supervisory computers 120).

The system 200 includes one or more private key generators (PKGs) 220 that define a plurality of public keys 222 and generate a plurality of private keys 224 for the entities 210. A public key 222 may be used to encrypt a message intended for a specific recipient associated with the public key 222, and a private key 224 corresponding to that public key 222 may be used to decrypt a message encrypted using that public key 222. In an identity-based encryption (IBE) scheme, an identifier associated with an entity 210 (e.g., username, email address, serial number, etc.) may serve as a public key 222 or be used to generate the public key 222. In a hierarchical identity-based encryption (HIBE) scheme, a composite of identifiers including all of the identifiers associated with the entity 210 and its ascendants in a hierarchy may serve as a public key 222 or be used to generate the public key 222.

In some examples, the PKG 220 may define each public key 222 and/or generate each private key 224 independently for each entity 210. For example, the PKG 220 may define a first public key 222 and/or generate a first private key 224 for a first entity 210 at a first time, and define a second public key 222 and/or generate a second private key 224 for a second entity 210 at a second time different from the first time. In some examples, the PKG 220 may define a public key 222 and/or generate a private key 224 for an entity 210 offline, e.g., when the entity 210 is in a non-operational state or mode.

In some examples, the PKG 220 may publish one or more public parameters for use in encryption, signature, key generation, and/or other cryptographic operations. Example public parameters may include a public key 222 of the PKG 220 (e.g., Ppub), a large prime number p, a group G, a bilinear paring function ê, one or more hash functions (e.g., H1, H2, etc.), and/or a security parameter (e.g., L for the length of plaintext).

The system 200 includes one or more identity revocation servers (IRSs) 230 that maintain a database 240 including the public keys 222 and status information associated with the public keys 222. Example status information may include a revocation status and a time associated with the revocation status (e.g., a validity duration). In some examples, an entity 210 may transmit an online identity status request (OIS-Req) 242 to the IRS 230 to request its status and receive an online identity status response (OIS-Resp) 244 from the IRS 230. The entity 210 may then use the OIS-Resp 244 to perform an encryption operation, a signature operation, and/or any other cryptographic operation.

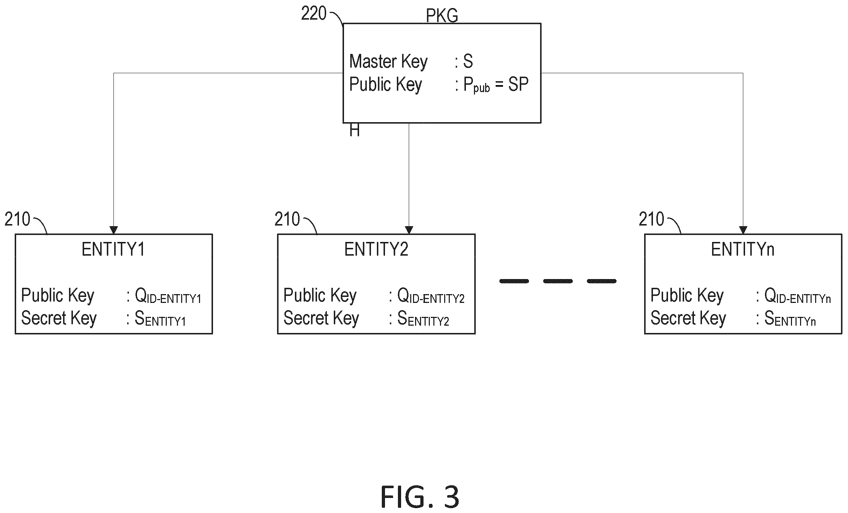

FIG. 3 shows key generation and distribution operations which may be performed using the system 200. In some examples, an entity 210 may undergo a registration process with the PKG 220 in which the PKG 220 performs the key generation and distribution operations before the entity 210 goes online, e.g., when the entity 210 is in an operational state or mode. For example, during registration, the PKG 220 may identify the entity 210, define a public key 222 for the entity 210, generate a private key 224 for the entity 210, and deliver the private key 224 to the entity 210. In some examples, the PKG 220 may use an identifier associated with an entity 210 (e.g., (ENTITY1), (ENTITY2), etc.) to generate a public key 222 for the entity 210 (e.g., Q_{ID-ENTITY1}, Q_{ID-ENTITY2}, etc.) and generate a private key 224 for the entity 210 (e.g., S_{ENTITY1} S_{ENTITY2}, etc.).

The PKG 220 may perform each of the key generation and distribution operations offline. Further, to mitigate a risk associated with storing cryptographic keys, the PKG 220 may remain offline after performing the key generation and distribution operations.

Once registration is complete, the entity 210 may be set online to be in an operational state or mode. In some examples, a first entity 210 (e.g., ENTITY1) may be setup or configured during a setup phase of the system 200 (e.g., during a network installation), and a second entity 210 (e.g., ENTITY2) may be setup or configured during an operational phase of the system 200 (e.g., while the first entity 210 is online). To ensure confidentiality and/or integrity of communication, the entity 210 may establish a secure connection or communication channel using a secure protocol, such as TLS (Transport Layer Security) and/or SSH (Secure Shell). In some examples, the entities 210 may be subject to continuous monitoring to detect and/or prevent unauthorized activities or security breaches.

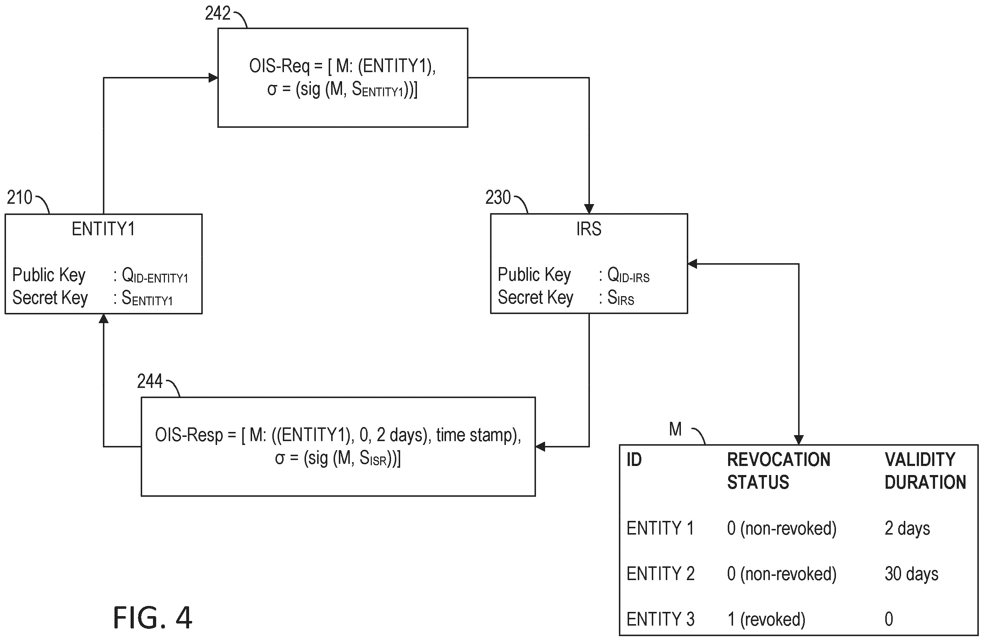

FIG. 4 shows identity revocation status-related operations which may be performed during the operational phase of the system 200. To mitigate a challenge of revoking access to encrypted data for a specific entity 210 after its private key 224 has been delivered (e.g., if the entity 210 and/or private key 224 is compromised), each entity 210 may communicate with an IRS 230, which, in contrast to the PKG 220, may remain online and reachable by the entities 210.

In some examples, an entity 210 may transmit an online identity status request (OIS-Req) 242 to the IRS 230 to request its status. As shown in FIG. 4, the OIS-Req 242 may include a message M including an identifier associated with the entity 210 (e.g., (ENTITY1)) and a digital signature σ that is generated by the entity 210 using its private key 224 (e.g., S_{ENTITY1}).

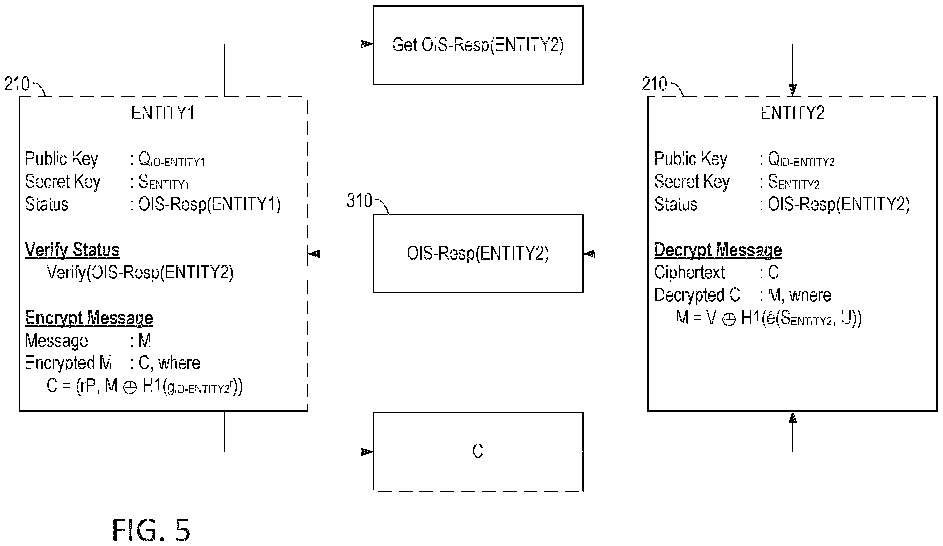

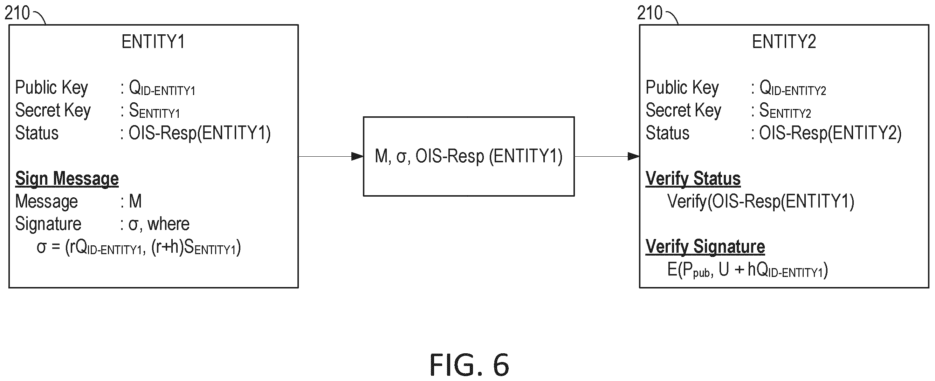

Upon receiving the OIS-Req 242, the IRS 230 may identify the entity 210 and verify the digital signature σ to authenticate the entity 210 and answer the OIS-Req 242 with an online identity status response (OIS-Resp) 244, which may be stored locally at the entity 210 for use in encryption and signature operations (shown in FIGS. 5 and 6). As shown in FIG. 4, the OIS-Resp 244 may include a message M, a time stamp, and a digital signature σ that is generated by the IRS 230 using its private key 224 (e.g., S_{IRS}). In some examples, the message M of the OIS-Resp 244 may include the identifier associated with the entity 210, a revocation status, and/or a time associated with the revocation status. A revocation status of "0" may indicate that access has not been revoked, and a revocation status of "1" may indicate that access has been revoked. The time associated with the revocation status may indicate when the status will be revoked (e.g., 01/01/2025) and/or how long the status will be non-revoked (e.g., 2 days, 30 days, 0 days, etc.). For example, if access for an entity 210 has been revoked, the validity duration may be automatically set to "0".

FIG. 5 shows encryption and decryption operations which may be performed during the operational phase of the system 200. To send a message M to a recipient entity 210 (e.g., ENTITY2), a sender entity 210 (e.g., ENTITY1) may first perform a revocation check operation by requesting an OIS-Resp 244 of the recipient entity 210 (e.g., OIS-Resp (ENTITY2)), to which the recipient entity 210 would answer with its OIS-Resp 244. The sender entity 210 may then determine the validity of the OIS-Resp 244 of the recipient entity 210. If the OIS-Resp 244 of the recipient entity 210 is valid and/or indicates that access for the recipient entity 210 has not been revoked (e.g., the OIS-Resp 244 of the recipient entity 210 includes a revocation status of "0"), then the sender entity 210 may use the public key 222 associated with the recipient entity 210 (e.g., Q_{ID-ENTITY2}) to encrypt the message M and obtain a ciphertext C, which the sender entity 210 may send to the recipient entity 210. On the other hand, if the OIS-Resp 244 of the recipient entity 210 is invalid and/or indicates that access for the recipient entity 210 has been revoked (e.g., the OIS-Resp 244 of the recipient entity 210 includes a revocation status of "1"), then the sender entity 210 may send an error message to the recipient entity 210.

Upon receiving the ciphertext C from the sender entity 210, the recipient entity 210 may use its private key 224 (e.g., S_{ENTITY2}) to decrypt the ciphertext C and access the plaintext message M.

FIG. 6 shows signature and signature verification operations which may be performed during the operational phase of the system 200. Signature and signature verification operations may be performed, for example, for message authentication or non-repudiation purposes.

In some examples, a first entity 210 (e.g., ENTITY1) may transmit a message M, a digital signature σ that is generated by the signing entity 210 using its private key 224 (e.g., S_{ENTITY1}), and its OIS-Resp 244 (e.g., OIS-Resp(ENTITY1)). Upon receiving the message M, digital signature σ, and OIS-Resp 244 from the first entity 210, a second entity 210 (e.g., ENTITY2) may determine the validity of the OIS-Resp 244 of the first entity 210 and verify the digital signature σ of the first entity 210 using the public key 222 associated with the first entity 210 (e.g., Q_{ID-ENTITY1}). If the OIS-Resp 244 of the first entity 210 is valid (e.g., the OIS-Resp 244 of the first entity 210 includes a revocation status of "0") and the digital signature σ is valid, then the second entity 210 may authenticate the origin of the message M. On the other hand, if the OIS-Resp 244 of the first entity 210 is invalid (e.g., the OIS-Resp 244 of the recipient entity 210 includes a revocation status of "1") and/or the digital signature σ is invalid, then the sender entity 210 may send an error message to the recipient entity 210.

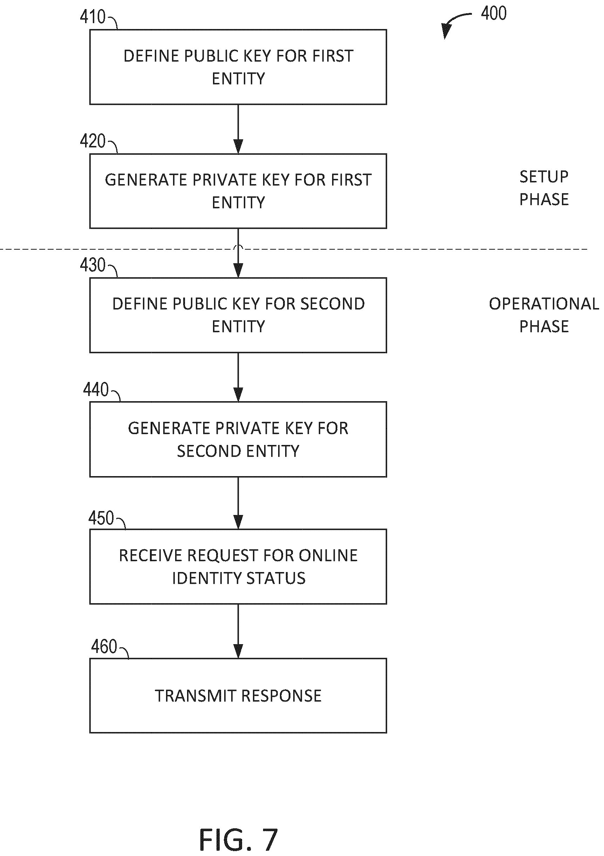

FIG. 7 shows an example method 400 for cryptographic identity management. The method 400 may be implemented, for example, in the ICS 100 using the system 200. In some examples, each of the entities 210 is configured to be switched between a non-operational mode and an operational mode. An entity 210 may be in a non-operational mode, for example, when it is offline, not connected to the network, and/or not actively communicating with other entities 210 within the system 200. An entity 210 may be taken offline intentionally (e.g., during maintenance or troubleshooting activities) or unintentionally (e.g., due to a network issue or failure). An entity 210 may be in an operational mode, for example, when it is online, connected to the network, and/or actively communicating with one or more other entities 210 within the system 200.

During a setup phase of the system 200, a public key 222 may be defined for a first entity 210 at operation 410 and a private key 224 may be generated for the first entity 210 at operation 420. The public key 222 may be defined and/or the private key 224 may be generated using one of an IBE scheme or an HIBE scheme. In some examples, the public key 222 may be defined and/or the private key 224 may be generated for the first entity 210 while the first entity 210 is in the non-operational mode.

During an operational phase of the system 200, in which the first entity 210 is in the operational mode, a second entity 210 may be set up before integrating it into the system 200 by defining a public key 222 for the second entity 210 at operation 430 and generating a private key 224 for the second entity 210 at operation 440. The public key 222 may be defined and/or the private key 224 may be generated using one of an IBE scheme or an HIBE scheme. In some examples, the public key 222 may be defined and/or the private key 224 may be generated for the second entity 210 while the second entity 210 is in the non-operational mode. Additionally or alternatively, the public key 222 and/or private key 224 for the second entity 210 may be defined and/or generated using a PKG 220 different from that used to define and/or generate the public key 222 and/or private key 224 for the first entity 210. For example, the system 200 may include a plurality of PKGs 220 in a hierarchical form, and each PKG 220 may generate private keys 224 for entities directly associated with it (e.g., because the entity 210 is in its domain).

When both the first entity 210 and the second entity 210 are in the operational mode, a request for an online identity status may be received from one or more of the first entity 210 or the second entity 210 at operation 450. A response including the online identity status may be transmitted to the one or more of the first entity 210 or the second entity 210 at operation 460. In some examples, the response may include a time stamp and a digital signature. With its private key 224 and online identity status, the first entity 210 and/or second entity 210 may perform an encryption operation and/or a signature operation within the system 200.

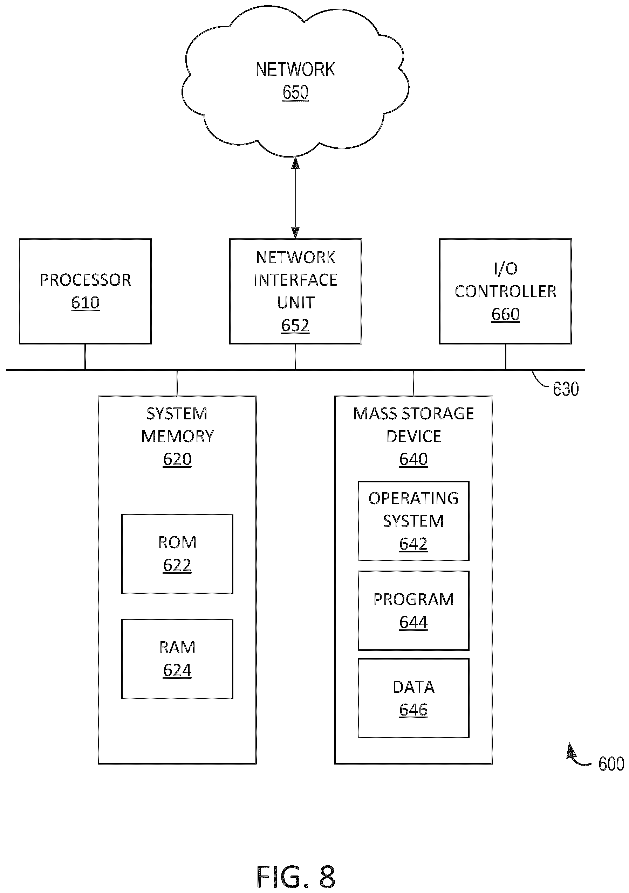

FIG. 8 shows a computing system 600 (e.g., supervisory computer 120, entity 210, PKG 220, IRS 230) configured to perform one or more computing operations described herein. In some examples, the computing system 600 includes a processor 610, a system memory 620, and a bus 630 coupling various system components including the system memory 620 to the processor 610.

The processor 610 is configured to perform general computing functions and process data and instructions to perform one or more operations and/or provide other functionality described herein. For example, the processor 610 may access the system memory 620 to read data and instructions from and/or write data and instructions to the system memory 620 for use in executing one or more computer-executable instructions. In this manner, the processor 610 may be programmed to execute any aspect of the software components described herein, including software components for implementing the entity 210 (shown in FIG. 2), private key generator 220 (shown in FIG. 2), and/or identity revocation server 230 (shown in FIG. 2). In some examples, the processor 610 may be or include any quantity of processing units including a central processing unit, a graphics processing unit, a field-programmable gate array (FPGA), a digital signal processor (DSP), or other hardware logic components including, without limitation, an Application-Specific Integrated Circuit (ASIC), Application-Specific Standard Product (ASSP), System-on-a-Chip System (SOC), Complex Programmable Logic Device (CPLD), etc.

The system memory 620 includes any combination of computer-readable media that may be accessed by the processor 610. In some examples, the system memory 620 includes a read-only memory (ROM) 622 which stores instructions for executing basic functions and a random access memory (RAM) 624 which temporarily stores data and instructions for actively used programs. For example, the RAM 624 may be used to host or store public keys 222 (shown in FIG. 2), private keys 224 (shown in FIG. 2), OIS-Reqs 242 (shown in FIG. 2), and/or OIS-Resps 244 (shown in FIG. 2), as well as one or more software components for implementing the entity 210 (shown in FIG. 2), private key generator 220 (shown in FIG. 2), and/or identity revocation server 230 (shown in FIG. 2).

Computer-readable media includes both communication media and computer storage media. Communication media typically embody computer-readable instructions, data structures, program modules, or other data in a modulated data signal, such as a carrier wave or other transport mechanism. The term "modulated data signal" means a signal that has one or more of its characteristics set or changed in a manner as to encode information in the signal. By way of example, and not limitation, communication media includes wired media, such as a wired network or direct-wired connection, and wireless media, such as acoustic, radio frequency, and infrared media.

In contrast, computer storage media include tangible forms of media that can store information such as computer-readable instructions, data structures, program modules, or other data. By way of example, and not limitation, computer storage media includes ROM 622, RAM 624, hard disk drives (HDDs), solid-state drives (SSDs), external hard drives, flash drives, optical storage media (e.g., compact discs (CDs), digital versatile discs (DVDs), and magnetic storage media (e.g., tape drives). For purposes of the present disclosure, computer storage media is mutually exclusive to communication media and excludes waves, signals, and other transitory or intangible forms of media.

It should be appreciated that the software components described herein, when loaded into the processor 610 and executed, may transform the processor 610 and the overall computing system 600 from a general-purpose computing system into a special-purpose computing system customized to facilitate the functionality described herein. More specifically, the computer-executable instructions contained within the software components described herein transform the processor 610 to operate or function as a finite-state machine by specifying how the processor 610 transitions between states, thereby transforming the transistors or other discrete circuit elements constituting the processor 610.

Encoding the software components described herein may also transform the physical structure of the computer-readable media described herein. The specific transformation of physical structure may depend on various factors, in different implementations of the present disclosure. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the transistors, capacitors, or other discrete circuit elements constituting the semiconductor-based memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In some examples, the computing system 600 includes a mass storage device 640 (e.g., database 240) coupled to the processor 610 for hosting or storing data and instructions, such as an operating system 642, one or more programs 644 (e.g., entity 210, private key generator 220, identity revocation server 230), and/or data 646 (e.g., public keys 222, private keys 224, OIS-Reqs 242, and/or OIS-Resps 244). One of ordinary skill in the art would understand that copies of at least some data and/or instructions hosted or stored in the mass storage device 640 may be at least temporarily stored in the system memory 620 to enable the computing system 600 to function as described herein.

As shown in FIG. 6, the computing system 600 may connect to a network 650 (e.g., network 130) through a network interface unit 652 connected to the bus 630. In this manner, the computing system 600 may operate in a networked environment in which the computing system 600 may use one or more remote devices (not shown) to host or store at least some data and/or to execute at least some instructions. Computer communication between computing systems can be a network transfer, a file transfer, an applet transfer, an email, a hypertext transfer protocol (HTTP) transfer, and so on.

In some examples, the computing system 600 may include one or more input/output (I/O) controllers 660 that facilitate communication and data transfer between the processor 610 and one or more I/O devices (not shown) configured to provide input and/or output capabilities. For example, a user may enter commands and information into the computing system 600 using one or more input devices, such as a keyboard, pointing device (e.g., mouse, trackball, touch pad, stylus), microphone, camera, scanner, accelerometer, and the like. Additionally or alternatively, the computing system 600 may present various forms of information, such as text, images, audio, video, alerts, and the like, using one or more output devices, such as a monitor, projector, printer, speaker, actuator, and the like. In some examples, the output device may be integrated with the input device (e.g., in a touchscreen panel or in a controller including a vibrating component).

While some examples are illustrated and described herein with reference to the computing system 600 being, including, or being included in the supervisory computer 120 (shown in FIG. 1), entity 210 (shown in FIG. 2), PKG 220 (shown in FIG. 2), and/or IRS 230 (shown in FIG. 2), aspects of the present disclosure are operable with any computing system that can execute computer-executable instructions to implement the operations and functionality associated with the computing system 600. It is also contemplated that the computing system 600 may not include all of the components shown in FIG. 6, may include other components that are not explicitly shown in FIG. 6, or may utilize an architecture completely different than that shown in FIG. 6. The computing system 600 should not be interpreted as having any dependency or requirement relating to any one or combination of components shown in FIG. 6. The computing system 600 is only one example of a computing and networking environment for performing one or more computing operations and is not intended to suggest any limitation as to the scope of use or functionality of the present disclosure.

Example methods and systems are described herein for managing cryptographic identities. The examples described herein define public keys and/or generate private keys offline. They do not use certificates to bind entities to their public keys, and they do not require any central certificate authority for encryption or signature verification. The examples described herein also provide a reliable means for obtaining a time-stamped, signed revocation status which may be used for encryption or signature verification. In view of the above, it will be seen that several advantages of the aspects of the present disclosure are achieved and other advantageous results attained.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Examples of the present disclosure may be described in the general context of computer-executable instructions, such as program modules, executed by one or more computers or other devices in software, firmware, hardware, or a combination thereof. The computer-executable instructions may be organized into one or more computer-executable modules or components. Generally, program modules include, but are not limited to, routines, objects, components, and data structures that perform particular tasks or implement particular abstract data types. Aspects of the disclosure may be implemented with any number and organization of such modules or components. For example, aspects of the present disclosure are not limited to the specific computer-executable instructions or the specific components or modules illustrated in the figures and described herein. Other examples of the present disclosure may include different computer-executable instructions or components having more or less functionality than illustrated and described herein.

In some examples, the operations illustrated in the drawings may be implemented as software instructions encoded on a computer readable medium, in hardware programmed or designed to perform the operations, or both. For example, aspects of the present disclosure may be implemented as a system on a chip or other circuitry including a plurality of interconnected, electrically conductive elements.

In operation, processors, computers and/or servers may execute the processor-executable instructions (e.g., software, firmware, and/or hardware) such as those illustrated herein to implement aspects of the invention.

It is possible for one or more elements of an implementation of an apparatus as described herein to be used to perform tasks or execute other sets of instructions that are not directly related to an operation of the apparatus, such as a task relating to another operation of a device or system in which the apparatus is embedded. It is also possible for one or more elements of an implementation of such an apparatus to have structure in common (e.g., a processor used to execute portions of code corresponding to different elements at different times, a set of instructions executed to perform tasks corresponding to different elements at different times, or an arrangement of electronic and/or optical devices performing operations for different elements at different times).

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in examples of the present disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the present disclosure.

The examples illustrated and described herein as well as examples not specifically described herein but within the scope of aspects of the present disclosure constitute example means for managing cryptographic identities. For example, the elements illustrated in FIGS. 1-6 and 8, when programmed, encoded, or configured to perform the operations illustrated in FIGS. 3-7, constitute at least an example means for defining a public key for a first entity and generating a private key for the first entity while the first entity is in the non-operational mode (e.g., PKG 220), identifying a second entity that is in a non-operational mode and defining a public key for the second entity and generating a private key for the second entity while the second entity is in the non-operational mode (e.g., PKG 220), receiving, from the first entity and/or second entity, a request for an online identity status while the first entity and the second entity are in the operational mode (e.g., IRS 230), and/or transmitting, to the first entity and/or second entity, a response including the online identity status (e.g., IRS 230).

When introducing elements of aspects of the disclosure or the examples thereof, the articles "a," "an," "the," and "said" are intended to mean that there are one or more of the elements. Furthermore, references to an "embodiment" or "example" of the present disclosure are not intended to be interpreted as excluding the existence of additional embodiments or examples that also incorporate the recited features. The terms "comprising," "including," and "having" are intended to be inclusive and mean that there may be additional elements other than the listed elements. The phrase "one or more of the following: A, B, and C" means "at least one of A and/or at least one of B and/or at least one of C."

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

In the present description, reference numbers have sometimes been used in connection with various terms. Where a term is used in connection with a reference number, this may be meant to refer to a specific element that is shown in one or more of the figures. Where a term is used without a reference number, this may be meant to refer generally to the term without limitation to any particular figure.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the aspects of the present disclosure have been described in terms of various examples with their associated operations, a person skilled in the art would appreciate that a combination of operations from any number of different examples is also within the scope of the aspects of the present disclosure.

In view of the above, it will be seen that several advantages of the aspects of the invention are achieved and other advantageous results attained.

Accordingly, the present invention may also be described as follows, optionally in combination with one or more of the above-mentioned features of the present invention: Cryptographic identity management in an industrial control system. During a setup phase, a public key is defined and a private key is generated for a first entity while the first entity is in the non-operational mode. During an operational mode of the first entity, a second entity that is in a non-operational mode is identified. A public key is defined and a private key is generated for the second entity while the second entity is in the non-operational mode. Responsive to a request, an online identity status is transmitted to an entity (e.g., first or second entity), while the entity is in the operational mode. In this manner, the entity may be configured to use the online identity status to perform an encryption and/or a signature operation.

## Claims

1. Method for cryptographic identity management in an industrial control system including a plurality of entities, each of the plurality of entities configured to be switched between a non-operational mode and an operational mode, the method comprising:
during a setup phase, defining a public key for a first entity of the plurality of entities and generating a private key for the first entity while the first entity is in the non-operational mode;
during an operational phase in which the first entity is in the operational mode, identifying a second entity of the plurality of entities that is in the non-operational mode, and defining a public key for the second entity and generating a private key for the second entity while the second entity is in the non-operational mode;
receiving, from one or more of the first entity or the second entity, a request for an online identity status while the first entity and the second entity are in the operational mode; and
transmitting, to the one or more of the first entity or the second entity, a response including the online identity status, wherein the one or more of the first entity or the second entity is configured to use the online identity status to perform one or more of an encryption operation or a signature operation.

2. Method as set forth in claim 1, wherein defining the public key for the first entity and generating the private key for the first entity further comprises defining the public key for the first entity and generating the private key for the first entity using one of an identity-based encryption scheme or a hierarchical identity-based encryption scheme.

3. Method as set forth in any one of the preceding claims, wherein defining the public key for the second entity and generating the private key for the second entity further comprises defining the public key for the second entity and generating the private key for the second entity using one of an identity-based encryption scheme or a hierarchical identity-based encryption scheme.

4. Method as set forth in any one of the preceding claims, wherein generating the private key for the first entity further comprises generating the private key for the first entity using a first private key generator, and wherein generating the private key for the second entity further comprises generating the private key for the second entity using a second private key generator different from the first private key generator.

5. Method as set forth in any one of the preceding claims, wherein receiving the request for the online identity status further comprises receiving, from the second entity, the request for the online identity status associated with the second entity, and wherein transmitting the response further comprises transmitting, to the second entity, the response including the online identity status associated with the second entity, wherein the first entity is configured to communicate with the second entity to obtain the online identity status associated with the second entity and determine whether the online identity status associated with the second entity is valid.

6. Method as set forth in any one of the preceding claims, wherein receiving the request for the online identity status further comprises receiving, from the first entity, the request for the online identity status associated with the first entity, and wherein transmitting the response further comprises transmitting, to the first entity, the response including the online identity status associated with the first entity, wherein the second entity is configured to obtain the online identity status associated with the first entity and determine whether the online identity status associated with the first entity is valid.

7. System for cryptographic identity management in an industrial control system, the system comprising:
one or more processors; and
one or more storage media communicatively coupled to the one or more processors, the one or more storage media storing instructions that, when executed by the one or processors, cause the system to perform the method of any one of claims 1 to 6.

8. Industrial control system, comprising:
a plurality of entities, each of the plurality of entities configured to be switched between a non-operational mode and an operational mode;
one or more private key generators configured to define a plurality of public keys for the plurality of entities and generate a plurality of private keys for the plurality of entities; and
one or more identity revocation servers configured to maintain a database including a plurality of online identity statuses associated with the plurality of entities, wherein:
during a setup phase, the one or more private key generators defines a first public key for a first entity of the plurality of entities and generates a first private key for the first entity while the first entity is in the non-operational mode;
during an operational phase in which the first entity is in the operational mode, the one or more private key generators identifies a second entity of the plurality of entities that is in the non-operational mode, and defines a second public key for the second entity and generates a second private key for the second entity while the second entity is in the non-operational mode;
the one or more identity revocation servers receives, from one or more of the first entity or the second entity, a request for an online identity status, and transmits, to the one or more of the first entity or the second entity, a response including the online identity status, wherein the one or more of the first entity or the second entity is configured to use the online identity status to perform one or more of an encryption operation or a signature operation.

9. Industrial control system as set forth in claim 8, wherein the one or more private key generators are configured to define the plurality of public keys for the plurality of entities and generate the plurality of private keys for the plurality of entities using one of an identity-based encryption scheme or a hierarchical identity-based encryption scheme.

10. Industrial control system as set forth in any one of claims 8 to 9, wherein the one or more private key generators comprises a first private key generator configured to generate the private key for a first entity of the plurality of entities and a second private key generator configured to generate the private key for a second entity of the plurality of entities.

11. Industrial control system as set forth in any one of claims 8 to 10, wherein the one or more identity revocation servers are configured to receive, from the second entity, the request for the online identity status associated with the second entity, and transmit, to the second entity, the response including the online identity status associated with the second entity, wherein the first entity is configured to communicate with the second entity to obtain the online identity status associated with the second entity and determine whether the online identity status associated with the second entity is valid.

12. The industrial control system as set forth in any one of claims 8 to 11, wherein the one or more identity revocation servers are configured to receive, from the first entity, the request for the online identity status associated with the first entity, and transmit, to the first entity, the response including the online identity status associated with the first entity, wherein the second entity is configured to obtain the online identity status associated with the first entity and determine whether the online identity status associated with the first entity is valid.

13. Industrial control system as set forth in any one of claims 8 to 12, wherein the one or more private key generators are configured to define one or more public keys for the one or more identity revocation servers and generate one or more private keys for the one or more identity revocation servers.

14. Industrial control system as set forth in any one of claims 8 to 13, wherein the one or more private key generators are offline.

15. Industrial control system as set forth in any one of claims 8 to 14, wherein the one or more identity revocation servers are online.
